# EUROPEAN PATENT APPLICATION

(11) **EP 1 107 438 A2**
(43) Date of publication of application: **13.06.2001**
(21) Application number: 00660202.3
(22) Date of filing: 15.11.2000
(51) Int. Cl.: H02M 3/335, H02M 3/28

(54) **Balancing circuit for voltage division between capacitors**

(30) Priority: 10.12.1999 FI 992660
(71) Applicant: ABB Industry Oy, 00380 Helsinki (FI)
(72) Inventor: Lounila, Matti, 02620 Espoo (FI)
(74) Representative: Peltonen, Antti

(57) **Abstract**

A balancing circuit for voltages of a series-connection of capacitors, particularly for intermediate circuit capacitors of an inverter, there being at least two series-connected intermediate circuit capacitors across an intermediate circuit voltage, the balancing circuit comprising a converter circuit which in turn comprises a transformer (T1) a primary winding of which is divided into capacitor-specific part-windings (N11, N12), a secondary winding (N2) being connected to provide voltage supply. The converter circuit of the balancing circuit comprise sub-converters connected in parallel with each series-connected capacitor (C1, C2), each one of the sub-converters comprising a series connection of a part-winding (N11, N12) of the primary winding, a diode (D1, D2) and a semiconductor switch (V1, V2) to be controlled for balancing the voltages of the series-connected capacitors.

## Description

### BACKGROUND OF THE INVENTION

The present invention relates to a balancing circuit for voltages of a series-connection of capacitors, particularly for intermediate circuit capacitors of an inverter, there being at least two intermediate circuit capacitors connected in series over an intermediate circuit voltage, the balancing circuit comprising a converter connection which in turn comprises a transformer a primary winding of which is divided into capacitor-specific part-windings and a secondary winding of which is connected to provide voltage supply.

In a DC intermediate circuit of an inverter, energy is usually stored in a capacitor battery which, due to the magnitude of the intermediate circuit voltage, comprises two or more series-connected capacitors. Static voltage of series-connected capacitors is usually not divided evenly because of differences in capacitor leakage currents, whereas dynamic voltage is not divided evenly because of capacitance tolerances.

According to the prior art, voltage division between series-connected capacitors in connection with inverters is usually balanced using capacitor-specific parallel resistors connected in parallel with each series-connected capacitor concerned. To provide an appropriate balancing, the resistors should be dimensioned so that the current flowing through the resistors is considerably higher than the leakage current of the capacitor. High current flowing through the resistors causes significant power losses in the resistors, which reduces the operating efficiency of the inverter.

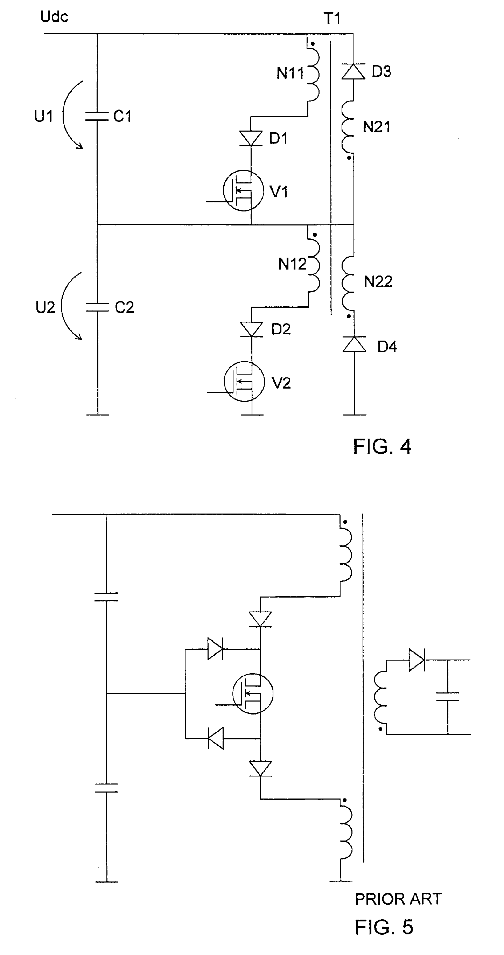

The auxiliary voltage needed in inverter control electronics is usually formed of the direct current in the inverter's intermediate circuit by using a switched-mode power source, which can be designed to balance at the same time the voltage in the capacitors of the intermediate circuit. This kind of solution is described in *Analysis of an Extended DC-DC Flyback Converter with Inherent Input Voltage Symmetrization* by H. ErtI, J.W. Kolar, F.C. Zach, PCIM '98 Europe Proceedings, Nuremberg. The described solution is based on a flyback converter used for balancing the voltages of series-connected capacitors and, at the same time, for generating an auxiliary voltage, as shown in Figure 5. A drawback in the solution is that the circuit is only suitable in cases where two capacitors are connected in series.

Another shortcoming of the circuit is that the switch to be used in the converter is subjected to a high voltage stress which may be even double the DC voltage of the intermediate circuit. Consequently, a switch component enduring high voltages must be selected. Moreover, due to the circuit structure, the rate of voltage change acting across the control transformer of the switch used in the circuit is high.

### BRIEF DESCRIPTION OF THE INVENTION

It is an object of the present invention to provide a balancing circuit for voltages of series-connected capacitors that allows the above shortcomings to be avoided and the voltages to be balanced using a simple and reliable circuit. This object is achieved with a circuit of the invention which is characterized in that the converter circuit of the balancing circuit comprises sub-converters connected in parallel with each series-connected capacitor, the sub-converters each comprising a series connection of a part-winding of a primary winding, a diode and a semiconductor switch to be controlled for balancing the voltages of the series-connected capacitors.

The balancing circuit of the invention is based on a modification of a flyback-type converter where the primary winding of the converter is divided into part-windings. Modified sub-converters are connected in series so that their number corresponds to that of the series-connected capacitors. The primary circuit of a sub-converter is composed of a series connection of the diode of the switch to be controlled and the part-winding of the transformer's primary winding. The circuit of the invention can also be used when there are more than two series-connected capacitors.

The circuit of the invention can be used in connection with the balancing of the voltage division for generating power from the secondary winding to be used as auxiliary power needed by the inverter, for example, or to make the balancing of the voltage division more efficient.

### BRIEF DESCRIPTION OF THE DRAWINGS

In the following the invention will be described in greater detail in connection with preferred embodiments and with reference to the accompanying drawings, in which
Figure 1 illustrates a prior art flyback converter;
Figure 2 illustrates a balancing circuit of the invention with two series-connected capacitors;
Figure 3 illustrates a balancing circuit of the invention with three series-connected capacitors;
Figure 4 illustrates a balancing circuit of the invention where a secondary circuit is connected to enhance the balancing of voltages;
Figure 5 illustrates a prior art balancing circuit.

### DETAILED DESCRIPTION OF THE INVENTION

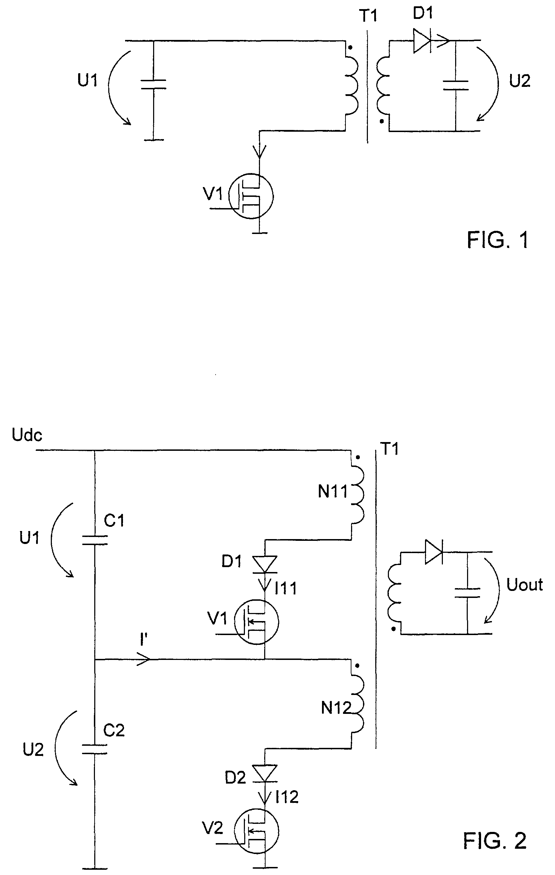

Figure 1 shows a prior art flyback-type converter, the circuit of the invention being based on a modification of the converter. The operating principle of the described converter is that a voltage U1 on the input side of the converter is used for generating an output voltage U2. The magnitude of the voltage U2 can be influenced by changing the utilization ratio of a switch component V1. When the switch V1 is conducting, a diode D1 is in a blocking state due to the polarities of a transformer T1 included in the converter. No current is flowing on the secondary side of the transformer, so power is stored at the same time in the transformer. When the switch V1 is set to a non-conductive state, this power discharges as secondary circuit current.

Figure 2 illustrates the circuit of the invention, which allows the division of voltage between the series-connected capacitors to be balanced and, at the same time, voltage to be generated to provide auxiliary voltage for an inverter, for example. The circuit shown in Figure 2 relates to the balancing of voltages of two series-connected capacitors C1, C2. Like the flyback converter, the circuit of the invention also comprises a transformer T1. In the circuit of the invention the primary winding of the transformer is divided into a plural number of part-windings N11, N12 each comprising an equal number of turns. In Figure 2 there are two part-windings, but usually their number corresponds to that of the series-connected capacitors. In the invention, each part-winding N11, N12 of the transformer T1 is connected in series with the diode D1, D2 and the switch V1, V2 to be controlled. These sub-converters composed of a part-winding, diode and switch are in turn connected in parallel with each capacitor.

The sub-converter circuit is implemented by connecting an anode of the diode through the part-winding of the converter to the capacitor pole having a higher potential and, correspondingly, by connecting the emitter of the switch to be controlled to the pole which has a lower potential. In the circuit of Figure 2 the positive pole of the part-winding N11 is connected to an intermediate circuit voltage Udc. The other pole of the part-winding is connected to the anode of the diode D1, the cathode of the diode D1 being in turn connected as a switching component to a drain of an FET transistor serving as the switching component in this example. The source of the FET transistor is connected to the second pole of the capacitor C1 connected to the intermediate circuit voltage.

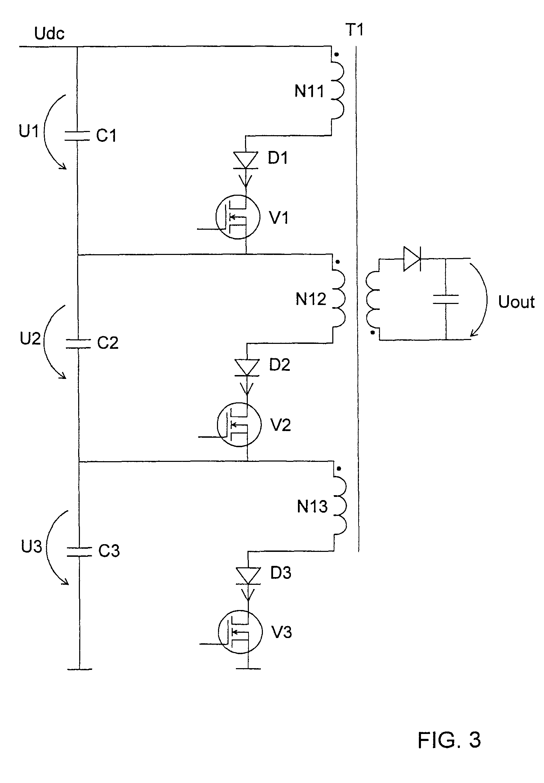

The other sub-converters are all similarly connected in parallel with the capacitor, the sub-converters being thus connected in series with respect to each other. Figure 2 shows a circuit of two capacitors and Figure 3 a circuit of three series-connected capacitors.

In the following, the operation of the circuit of the invention will be discussed in greater detail. Since the circuit switch components to be controlled are controlled simultaneously, a single control transformer comprising a necessary number of secondary circuits can be used. The primary winding of the control transformer is controlled using a modulator which employs feedback coupling to maintain a constant output voltage Uout. The principle of the invention does not require, however, the output voltage Uout to be a stabilized voltage. Instead, it may be for example an intermediate circuit voltage Udc, or, according to a preferred embodiment of the invention, the secondary circuit may be connected to charge a capacitor of a lower voltage.

In a situation where the voltage U1 of the upper capacitor C1 in the circuit shown in Figure 2 is higher than the voltage U2 of the lower capacitor C2, and when the switches are driven to a state of saturation, the voltages of both primary windings are equal because of the impact of the transformer, their magnitude being equal to the higher capacitor voltage, i.e. U1 in this case. The diode D2 is reverse-biased by an amount equal to a voltage difference U1 - U2 and thereby prevents current from flowing through the switch V2. Primary current thus flows only in the winding N11, the magnitude of the current being I11, and it returns to the common point of the capacitors C1, C2, and thus, using the references of the Figure, I' = -i11. The current returning to the point between the capacitors thus reduces the voltage of the upper capacitor C1 and increases the voltage of the lower capacitor C2.

If the capacitors C1, C2 shown in Figure 2 have an equal voltage, i.e. U1 = U2, and the switches are driven to saturation, also the voltages of both primary windings are equal and they have equal currents I11 = I12. Current is not flowing to the common point of the capacitors, and therefore the voltage division between the capacitors does not change. On the other hand, when the voltage U2 of the lower capacitor C2 is higher than the voltage U1 of the upper capacitor C1, the voltages of both primary windings are equal to the higher capacitor voltage, i.e. to the voltage U2. The diode D1 is thus reverse-biased by an amount equal to a voltage difference U2 - U1, thereby preventing current from flowing through the switch V1. In other words, primary current only flows in the winding N12. The current of the winding is I12 and it starts to flow from the common point (I' = 112) of the capacitors, thereby increasing the voltage of the upper capacitor C1 and reducing that of the lower capacitor C2.

In the case of Figure 2, when the switches are switched off, irrespective of the voltage division between the capacitors C1, C2, current starts to flow similarly as in an ordinary flyback converter and the voltage of the switches adopts the value determined by the conversion ratio between the primary and the secondary sides of the switches. The conversion ratio of the transformer T1 may be selected as needed in each case.

As already stated above, the principle of the invention can also be applied in a situation where there are more than two series-connected capacitors. If three capacitors are connected in series, the circuit is like the one in Figure 3. The primary winding of the transformer T1 has been divided into three parts N11, N12, N13 which are all controlled by a separate switch V1, V2, V3 through a diode D1, D2, D3 connected in series with the respective switch. The sub-converters thus formed are connected in series and their common points are connected to the corresponding common points of capacitors C1, C2, C3. All the switches V1, V2, V3 are controlled simultaneously for example from separate secondary windings of a common control converter.

The operation corresponds to that described above with reference to two series-connected capacitors. When the switches are conducting, all the windings have an equal voltage, the magnitude of which is equal to the highest capacitor voltage. If the voltages are of different magnitudes, primary current flows only in the winding corresponding to the capacitor charged with the highest voltage, thereby reducing the voltage of the capacitor in question.

The circuit of the invention can also be used as a regulable voltage source, without any specific purpose of balancing the voltages of the series-connected capacitors. In that case the series-connected capacitors act as a supply voltage source.

In the prior art solution shown in Figure 5 there are two series-connected capacitors. In addition, the switching components used in the circuit shown in Figure 5 is subjected to a considerably high voltage stress, the magnitude of which is typically 1.5...2*Udc. In the circuit of the invention the voltage acting on the switches is 1.5...2*Udc/n where n is the number of capacitors connected in series.

According to an embodiment of the invention, the balancing of the voltages of series-connected capacitors can be made more effective if also the power obtained from the secondary winding of the converter is used for the balancing. Figure 4 shows this preferred embodiment of the invention. In the embodiment, the secondary winding of the transformer T1 is divided into a plural number of part-windings N21, N22. The number of part-windings corresponds to that of the part-windings of the primary winding and the number of the series-connected capacitors. A diode D3, D4 is connected in series with the part-winding of each secondary side. The series connections thus formed are further connected in parallel with the sub-converters on the primary side of the transformer T1. The polarities of the diodes are as shown in Figure 4. In all embodiments of the invention the polarities of the transformer windings are similar to those of an ordinary flyback converter, as is shown in the Figures.

If the converter output voltage load formed by the balancing circuit is small, the power to be transferred is possibly not sufficient for balancing the voltage division of a large capacitor battery. In that case it is advantageous to use the preferred embodiment of the invention described above with reference to Figure 4. According to the embodiment, the secondary side of the converter comprises two secondary windings having an equal number of turns. When secondary current is flowing the winding voltages of both secondary windings are equal and their magnitude is equal to the lower capacitor voltage. If the capacitor voltages are not equal, rectifying diodes D3, D4 on the secondary side separate the capacitor having the higher voltage from the secondary circuit, whereby all the secondary current flows to the capacitor that has a lower voltage. Capacitor voltages are thus balanced both when primary current and secondary current flows, which enhances the circuit's voltage balancing impact. Furthermore, the magnitudes of the currents may be freely dimensioned to suit the capacitor battery. In this embodiment the switches in the primary circuit only need to be controlled when the voltage division is not balanced; thus the average thermal stress acting on the components decreases considerably even when high currents are concerned. The modulating of the switches may be based on restricting the peak current value, for example, without an actual voltage feedback coupling.

It is apparent to a person skilled in the art that as technology advances, the basic idea of the invention can be implemented in various ways. The invention and its embodiments are therefore not restricted to the above described examples but they may vary within the scope of the claims.

## Claims

1. A balancing circuit for voltages of a series-connection of capacitors, particularly for intermediate circuit capacitors of an inverter, there being at least two intermediate circuit capacitors connected in series over an intermediate circuit voltage, the balancing circuit comprising a converter connection which in turn comprises a transformer (T1) a primary winding of which is divided into capacitor-specific part-windings (N11, N12) and a secondary winding (N2) of which is connected to provide voltage supply, **characterized** in that the converter circuit of the balancing circuit comprises sub-converters connected in parallel with each series-connected capacitor (C1, C2), the sub-converters each comprising a series connection of a part-winding (N11, N12) of a primary winding, a diode (D1, D2) and a semiconductor switch (V1, V2) to be controlled for balancing the voltages of the series-connected capacitors

2. A balancing circuit according to claim 1, **characterized** in that the secondary circuit of the balancing circuit comprises a secondary winding of the converter, the secondary winding being divided into capacitor-specific part-windings (N21, N22), and diodes (D3, D4) connected in series with the part-windings of the secondary winding, the series connections being connected in parallel with the sub-converters for enhancing the balancing of the voltages of the capacitors (C1, C2).

3. Use of a balancing circuit of claim 1 as a voltage source.
